# EUROPEAN PATENT APPLICATION

(11) **EP 1 622 306 A2**
(43) Date of publication of application: **01.02.2006**
(21) Application number: 05014990.5
(22) Date of filing: 11.07.2005
(51) Int. Cl.: H04L 12/24, G06F 11/07

(54) **Event and dependency based failure identification management system and method**

(30) Priority: 12.07.2004 JP 2004204988
(71) Applicant: NTT DoCoMo, Inc., Tokyo 100-6150 (JP)
(72) Inventor: Suzuki, Takashi c/o Intellectual Property Dept., Chiyoda-ku Tokyo (JP)
(74) Representative: HOFFMANN EITLE

(57) **Abstract**

A management system (100) comprises an event monitoring unit (1) configured to detect an event, a dependency extracting unit (2) configured to extract a dependency regarding the event, a storage unit (3) in which the event and the dependency are stored, an updating unit (7a) configured to update the event and the dependency stored in the storage unit (3) according to an update rule, and a cause identifying unit (5) configured to identify a cause of failure based on the event and the dependency by accessing the storage unit (3).

## Description

### CROSS REFERENCE TO RELATED APPLICATIONS

This application is based upon and claims the benefit of priority from prior Japanese Patent Application No.2004-204988, filed on July 12, 2004; the entire contents of which are incorporated herein by reference.

### BACKGROUND OF THE INVENTION

### 1. Field of the Invention

The present invention relates to a management system and a management method for managing systems and devices. In particular, it relates to a management system and a management method suitable for identifying a cause of failures occurred in systems and devices.

### 2. Description of the Related Art

In recent years, as devices and systems such as cellular phones become advanced, the number of elements of software and hardware increases, and the devices and systems become more complex. In general, since it is difficult to abolish bugs and vulnerability of complex devices and systems, occurrence of failures is unavoidable. Moreover, the number of mutual dependencies between respective elements increases by the square of the increasing number of elements. Identifying a primary cause of failures tends to be difficult.

Meanwhile, very high reliability is requited of, for example, cellular phones or networks as communication infrastructures used for urgent notification. Accordingly, even in a case where failures occur in cellular phones or networks due to attacks exploiting the vulnerability or software program bugs, quick elimination of causes of the failures and restoration of their operations are demanded. Accordingly, efficiently identifying causes of failures is demanded.

As a conventional network management device for facilitating identification of causes of failures, there is a network management device that facilitates tracking the primary cause of a failure occurred in a network in which the failure of an element influences another element and propagates; wherein when a failure occurs at a first element in the network, the network management device sets a deterrent flag for a failure occurred in a second element that is dependent on the first element, thereby preventing redundant issuance of a warning due to the same failures (Japanese Patent Application Laid-open 2001-125854, referred to as 'Document 1' hereafter.)

Moreover, a system for estimating causes of multiple failure events that are inputted based on an inter-failure event propagation model and network structural information has been proposed (Japanese Patent Application Laid-open Hei 11-308221, referred to as 'Document2' hereafter.) According to this technique, on the precondition that the upper limit of the number of failure events which will occur in a propagation model due to respective causes of failures is known beforehand, a cause estimating method, which assigns indexes to respective causes of failures thereby using less amount of memory, has been proposed. Furthermore, a feedback means for detecting a failure propagation rule with lack of description by calculating correlation between failure events from failure event logs and then updating the propagation model has been disclosed.

Furthermore, a method of establishing inter-object dependency models, which are managed by a computer operating system (base software), from logs of events occurred on that operating system has been proposed (S. King, P. Chen, "Backtracking Intrusions", ACM SOSP 2003, referred to as 'Document 3' hereafter.) According to this technique, an event log is analyzed after a failure event has occurred, to generate a dependency model having the failure event as a basic point and display the dependency model, thereby supporting cause analysis.

However, the network management device disclosed in Document 1 identifies a failure event as a primary cause out of failure events that many elements occur on the precondition that failure events, which may be causes of failures, are selected in advance. As a result, causes that the network management device can identify are limited to pre-idendfiable failure events. This makes tracking impossible when pre-identification of an event as a primary cause of a failure is impossible. However, since there are a variety of events as primary causes of failures, determination of whether or not a failure event is the cause when it occurs is impossible.

The system disclosed in Reference 2 requires the precondition that the upper limit of the number of failure events is known beforehand. This precondition holds true only when an appropriate propagation model has been established. Therefore, even though the system may be applied to a structure such as a simple network when a manager already knows the structure and is capable of predicting a cause of a failure and occurrence of a failure event due to that cause, it cannot be applied to complex networks or devices that allow users to freely add elements of software or hardware. Moreover, according to this technique, detection of a failure propagation rule with lack of description and then update of a failure propagation model are possible. However, establishment of a highly accuracy propagation model from the initial state where there is no failure propagation rule is impossible. It is limited to cover the lack of description.

Moreover, according to the technique disclosed in Document 3, since inter-object dependency models are established from an event log that an operating system has recorded, pre-identification of causes of failures is unnecessary. However, since storing all event logs is necessary during operations, a required amount of storage capacity increases as those operations proceed.

In other words, according to either technique, there are limitations on preconditions or storage capacity, and therefore when those preconditions are not satisfied or when storage capacity is not enough, appropriately identifying the cause of a failure is impossible.

### SUMMARY OF THE INVENTION

The object of the present invention is to provide a management system and a management method capable of identifying a cause of failure occurred in a variety of devices and systems.

According to an aspect of the present invention, a management system comprises an event monitoring unit configured to detect an event, a dependency extracting unit configured to extract a dependency regarding the event, a storage unit in which the event and the dependency are stored, an updating unit configured to update the event and the dependency stored in the storage unit according to an update rule, and a cause identifying unit configured to identify a cause of failure based on the event and the dependency by accessing the storage unit.

According to such a management system, detection of an event occurred in a device or a system, extraction of a dependency regarding the event, and identification of a cause of failure may be carried out base on the event and the dependency. Therefore, the management system does not need to have preconditions that information of events, dependencies, and causes of failures must be known in advance. Moreover, the management system is capable of updating events and dependencies stored in a storage unit according to an update rule. Therefore, the management system not only does not need to store information in advance but also can appropriately update a detected event and dependency and then store only necessary information. This allows the management system to reduce necessary storage capacity and information processing load. As described thus far, the management system is capable of identifying a cause of failure occurred in a variety of devices and systems because it does not have limitations on preconditions and storage capacity. Particularly, the management system has an advantage as identification of a cause of failure occurred even in devices and systems having limited storage capacity and calculation capability is possible.

According to an aspect of the present invention, a management method comprises detecting an event, extracting a dependency regarding the event, updating the event and the dependency stored in a storage unit according to an update rule, and identifying a cause of failure based on the event and the dependency by accessing the storage unit.

### BRIEF DESCRIPTION OF THE DRAWINGS

FIG. 1 is a block diagram showing a management system according to a first embodiment of the present invention;
FIG 2 shows a database according to the first embodiment of the present invention;
FIG. 3 shows an update rule storage unit according to the first embodiment of the present invention;
FIG 4 shows a searching procedure for a cause of failure according to the fist embodiment of the present invention;
FIG 5 is a flowchart showing a management method for events and dependencies according to the first embodiment of the present invention;
FIG 6 is a flowchart showing a procedure of a cause identifying unit according to the first embodiment of the present invention;
FIG. 7 is a flowchart showing a procedure for identifying a cause of failure, according to the first embodiment of the present invention;
FIG. 8 is a block diagram showing a management system according to a second embodiment of the present invention;
FIG 9 shows a database according to the second embodiment of the present invention;
FIG. 10 shows a searching procedure for a cause of failure according to the second embodiment of the present invention;
FIG. 11 is a flowchart showing a management method for events and dependencies according to the second embodiment of the present invention;
FIG. 12 is a flowchart showing a procedure of a cause identifying unit according to the second embodiment of the present invention;
FIG. 13 is a flowchart showing a procedure for identifying a cause of failure, according to the second embodiment of the present invention; and
FIG 14 is a block diagram showing a management system according to a third embodiment of the present invention.

### DETAILED DESCRIPTION OF THE EMBODIMENTS

### (FIRST EMBODIMENT)

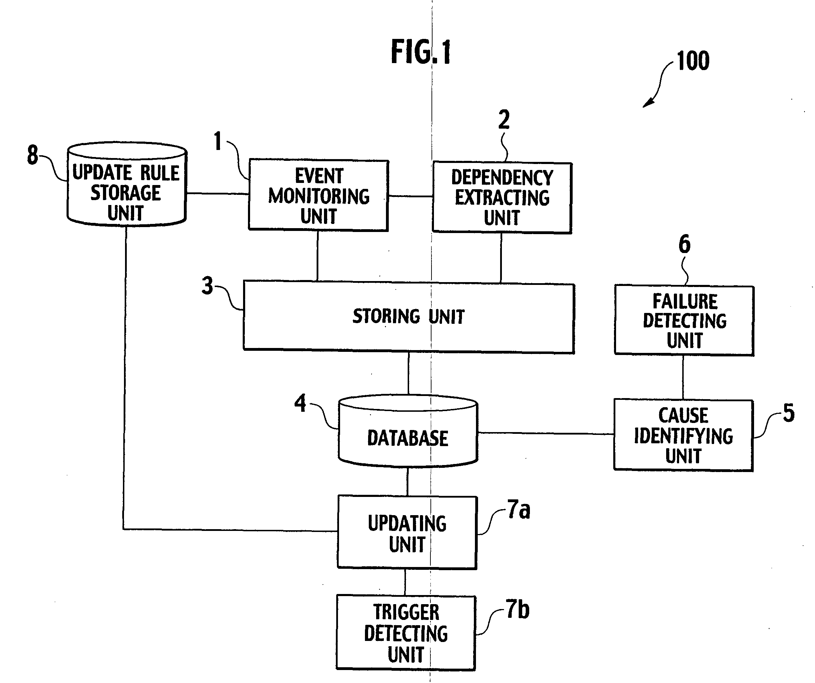

As shown in FIG. 1, a management system 100 includes an event monitoring unit 1, a dependency extracting unit 2, a storing unit 3, a database 4, a cause identifying unit 5, a failure detecting unit 6, an updating unit 7a, a trigger detecting unit 7b, and an update rule storage unit 8.

The event monitoring unit 1 detects an event occurred in a system or a device that is managed by the management system 100. The event monitoring unit 1 can monitor and detect events such as a system call issued by a process executed on an operating system (OS) or writing of a system setting file, for example.

The event monitoring unit 1 also retrieves a rule ID from the update rule storage unit 8. Update rules regarding update of information retained by the management system 100 are stored in the update rule storage unit 8. A rule ID is assigned to the update rule as an identifier for identifying the update rule. The event monitoring unit 1 selects an update rule to be applied to the detected event based on that event. The event monitoring unit 1 may select an update rule in accordance with importance of an event, for example. The event monitoring unit 1 then retrieves a rule ID assigned to the selected update rule. The event monitoring unit 1 inputs a detected event, event occurrence time of the detected event, and the rule ID to the storing unit 3. The event monitoring unit 1 also inputs the detected event to the dependency extracting unit 2. The event monitoring unit 1 can be implemented as a module in the operating system (OS).

The dependency extracting unit 2 extracts a dependency regarding an event. The dependency extracting unit 2 also receives the detected event from the event monitoring unit 1. The dependency extracting unit 2 can extract the dependency based on elements included in a system or device to be managed, a process that the system or device executes, and detected events. The dependency includes an inter-event dependency, inter-element dependency for an event, inter-process dependency for an event, dependency between an event and an element, and dependency between an event and a process. The elements may be memory, a file, and the like. In addition, the elements may be used by, for example, a process executed on the operating system (OS).

Upon reception of an event of writing a system setting file from the event monitoring unit 1, the dependency extracting unit 2 extracts the file name of the system setting file and a path to the system setting file as an element of a 'dependency source', which depends on the event of writing the system setting file, and the name of a process that has brought about the event of writing the system setting file as a process of a 'dependency destination' on which an event of writing the system setting file depends. The dependency extracting unit 2 inputs the extracted dependency to the storing unit 3.

Note that alternatively, the dependency extracting unit 2 may select an update rule, which will be applied to the extracted dependency based on the dependency. In this case, the dependency extracting unit 2 may select an update rule based on importance of the dependency, for example. The dependency extracting unit 2 retrieves a rule ID assigned to the selected update rule from the update rule storage unit 8. The dependency extracting unit 2 inputs the rule ID along with the extracted dependency to the storing unit 3.

The storing unit 3 receives a detected event, event occurrence time, and a rule ID from the event monitoring unit 1, and receives the extracted dependency from the dependency extracting unit 2. The storing unit 3 stores the event, the event occurrence time, and the rule ID, and the dependency corresponded to each other in the database 4.

The database 4 is a storage unit in which the event and the dependency are stored. Attribute information of the event or dependency corresponded to the event and dependency is stored in the database 4 as well as the event and dependency thereof. The attribute information includes event occurrence time, information regarding an update rule or the like. The information regarding the update rule includes an identifier for identifying an update rule applied to an update of an event or dependency thereof (for example, rule ID). The information regarding the update rule is accessed when applying the update rule for update of an event or dependency thereof.

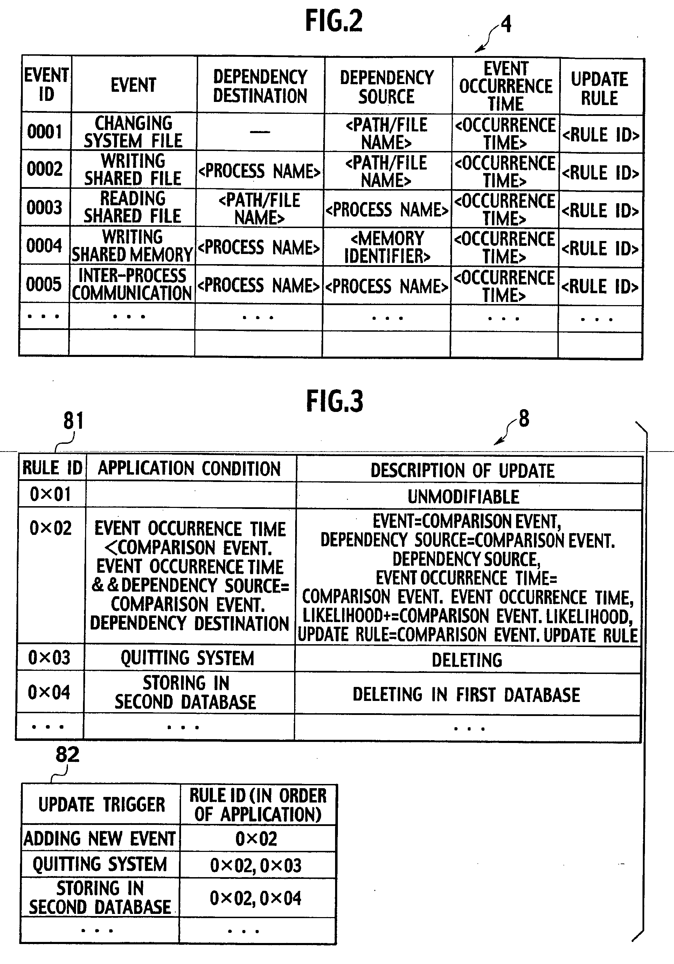

The database 4 includes fields of an event ID, an event, dependency destination, dependency source, event occurrence time and an update rule, as shown in FIG. 2. The dependency is represented by a dependency destination and a dependency source. A rule ID is stored in an update rule field. In the case, where there is no rule ID to be applied, 'NULL' is set to the update rule field. The storing unit 3 assigns an event ID that is an event identifier to an event, and stores an event, dependency, event occurrence time, and a rule ID corresponded to the event ID in the database 4.

The updating unit 7a updates an event and dependency thereof stored in the database 4 according to an update rule. The updating unit 7a retrieves an update rule from the update rule storage unit 8. The update rules may include rules for deleting less important information or temporary information, reducing multiple events and dependencies thereof. More specifically, the update rule storage unit 8 includes an update rule table 81 in which update rules are stored, and an update trigger rule table 82 in which update trigger rules are stored, as shown in FIG. 3. Rule IDs, application conditions, and descriptions of an update corresponded to each other are stored in the update rule table 81. The update rule includes descriptions of an update and application conditions for applying the descriptions of an update, and a rule ID is assigned to each update rule.

An update trigger and a rule ID of an update rule, which is applied at the update trigger corresponded to each other are stored in the update trigger rule table 82. As such, the update trigger rule may be description of the update trigger and the rule ID of an update rule, which is applied at the update trigger. The update trigger rule table 82 retains rule IDs in order of update rule application when multiple rule IDs corresponded to a single update trigger are stored. The update trigger can be set based on loads, memory usage or the like at a variety of triggers in a system or device to be managed. This facilitates application of the management system 100 to devices or systems having resources limited in calculation capability, storage capacity, or the like.

The trigger detecting unit 7b detects an update trigger for applying the update rules, and then notifies the updating unit 7a of the detected update trigger. The updating unit 7a receives a notification of the detected update trigger from the trigger detecting unit 7b. The updating unit 7a updates the database 4 according to an update rule to be applied at the update trigger notified from the trigger detecting unit 7b. More specifically, the updating unit 7a retrieves the update trigger rule table 82 based on the notified update trigger, and retrieves the rule ID for the updating rule to be applied at the detected update trigger. The updating unit 7a retrieves an update rule including an application condition and description of an update from the update rule table 81 based on the retrieved rule ID. The updating unit 7a updates the database 4 according to the retrieved application condition and description of an update.

Moreover, the updating unit 7a accesses the database 4, and then updates an event or dependency thereof to which the rule ID of an update rule, which is applied at the detected update trigger, is corresponded, according to the update rule. As such, the updating unit 7a can update the database 4 based on the information for the update rule, which is attribute information regarding an event or dependency thereof. More specifically, the updating unit 7a accesses the database 4, and then determines whether or not an update rule, which is applied to the event or dependency thereof by determining whether or not a rule ID is corresponded to an event or dependency thereof. If there is a rule ID corresponded thereto, the updating unit 7a updates the database 4 according to an update rule identified by the rule ID. If there is no update rule to be applied, the updating unit 7a can determine not to update the database 4. Note that while a single rule ID is corresponded to a single event in the database 4 in FIG. 2, the number of update rules to be applied to the single event is not limited. Accordingly, multiple rule IDs for a single event can be stored in the database 4.

The trigger detecting unit 7b detects that a new event is stored in the database 4, and then notifies the updating unit 7a. The updating unit 7a receiving the notification accesses the update trigger rule table 82, and then determines to use the update rule of a rule ID '0x02' corresponding to an update trigger of 'adding a new event'. The updating unit 7a then updates an event and dependency thereof to which a rule ID '0x02' is corresponded as the attribute information in the database 4 according to application conditions and descriptions of an update stored in the updating rule table 81. In this case, the event to which the rule ID '0x02' is corresponded in the database 4 becomes an event to be updated, and a new event becomes a comparison event.

When application conditions such that 'event occurrence time of an event to be updated is earlier than event occurrence time of a comparison event and a dependency source of the event to be updated is the same as a dependency destination of the comparison event' are satisfied, the updating unit 7a carries out processing described in the description of an update i.e., 'replacing information regarding an event to be updated with information regarding a comparison event'. This allows the updating unit 7a to replace an event of writing shared memory with an event of reading the shared memory when storing in the database 4 for inter-process communication via the shared memory. As a result, redundant dependencies may be reduced.

The failure detecting unit 6 detects failures occurred in a device or system to be managed. More specifically, the failure detecting unit 6 detects failures by receiving notification of a process abnormal termination from a kernel and notification from users. The failure detecting unit 6 notifies the cause identifying unit 5 of failure detection. The failure detecting unit 6 notifies of an element in which failure has occurred and a process name (hereafter, referred to as 'failure elements'), and failure occurrence time. The failure detecting unit 6 inputs a failure detection signal to the cause identifying unit 5, for example.

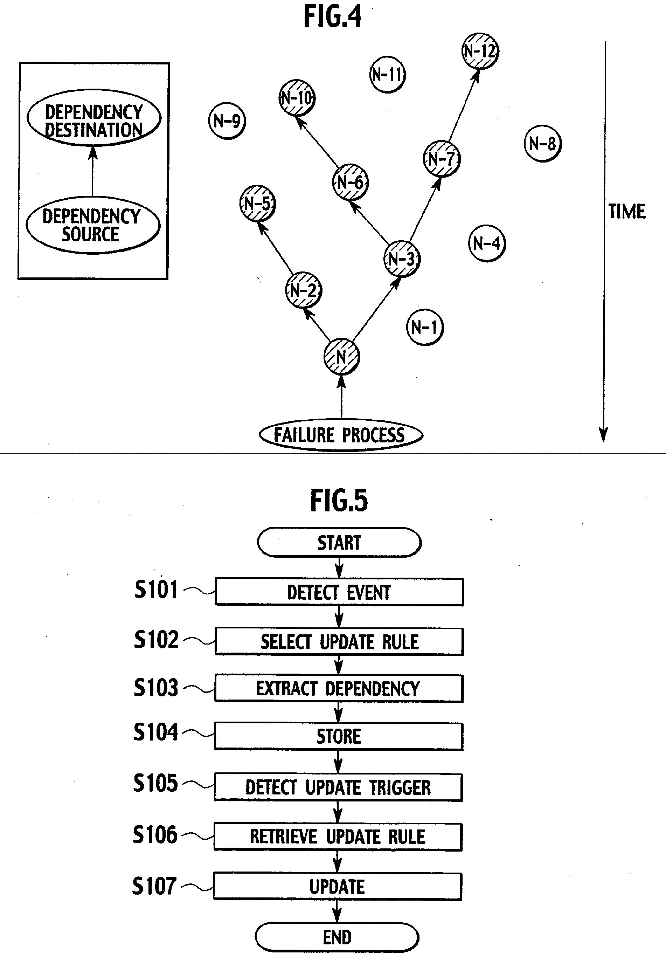

The cause identifying unit 5 identifies a cause of the failure based on the event and the dependency by accessing the database 4. Upon reception of notification of failure detection from the failure detecting unit 6, the cause identifying unit 5 starts identifying a cause thereof. The cause identifying unit 5 identifies the cause by accessing the database 4, and then analyzing an event, dependency thereof or the like. FIG. 4 shows a searching procedure for a cause of failure of the cause identifying unit 5. In FIG 4, multiple circles represent respective events; where 'N' through 'N-12' are respective event names. Short arrows denote respective relationships each between a dependency source event and a dependency destination event. A long arrow denotes lapse of time in a direction from the upper to the lower area in FIG 4.

The cause identifying unit 5 traces dependencies from a failure element such as a failure process notified from the failure detecting unit 6 as a staring point. The cause identifying unit 5 traces dependencies from a failure process as a starting point from the notified failure occurrence time in a reverse direction of elapsing time. Consequently, the cause identifying unit 5 searches an event on which the failure process directly or indirectly is dependent, thereby identifying it as a candidate for a cause of failure. In FIG. 4, the cause identifying unit 5 identifies events 'N','N-2', 'N-3', 'N-5', 'N-6', 'N-7', 'N-10', and 'N-12' as candidates for a cause of failure. The cause identifying unit 5 outputs the identified candidates for a cause of failure to a control unit or display of a device or system to be managed.

The cause of failure may be an erroneous correction of a system setting file, installation of applications or device drivers including program bugs, or system re-configuration by malicious programs such as programs including computer-viruses.

The management system 100 may be implemented as a part of a device or system to be managed. Alternatively, the management system 100 may be connected to a device or system to be managed. Such a management system is caused by making a computer execute a program for making the computer operate as an event monitoring unit configured to detect an event, a dependency extracting unit configured to extract a dependency regarding the event, a storage unit in which the event and the dependency are stored, an updating unit configured to update the event and the dependency stored in the storage unit according to an update rule, and a cause identifying unit configured to identify a cause of failure based on the event and the dependency by accessing the storage unit.

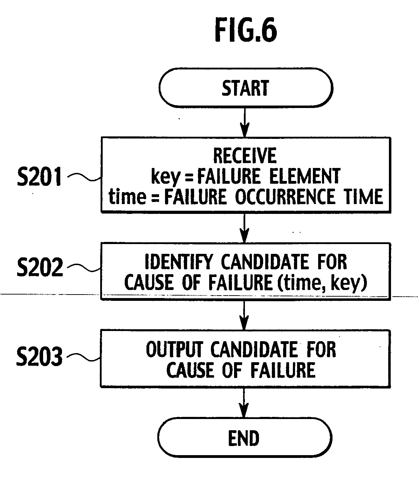

Next, a procedure according to a management method carried out by the management system 100 is explained using FIGS. 5 through 7. FIG. 5 shows a management method for events and dependencies thereof. The management system 100 detects an event occurred in a device or system to be managed (S101). The management system 100 selects an update rule regarding the detected event (rule ID) (S102). The management system 100 extracts a dependency regarding the occurred event (S103). The management system 100 stores the event, the dependency, the rule ID and the like in the database 4 (S104). The management system 100 detects an update trigger (S105). The management system 100 retrieves an update rule to be applied at the detected update trigger from the update rule storage unit 8 (S106). The management system 100 updates the database 4 according to the retrieved update rule (S107).

FIG 6 shows a procedure of the cause identifying unit 5. The cause identifying unit 5 receives a failure element and failure occurrence time from the failure detecting unit 6. The cause identifying unit 5 substitutes the failure element for a variable: *key* and the failure occurrence time for a variable: *time* (S201). The cause identifying unit 5 identifies a candidate for a cause of failure using the failure element as the *key* and the failure occurrence time as the *time* (S202). The cause identifying unit 5 outputs the identified candidate for a cause of failure (S203).

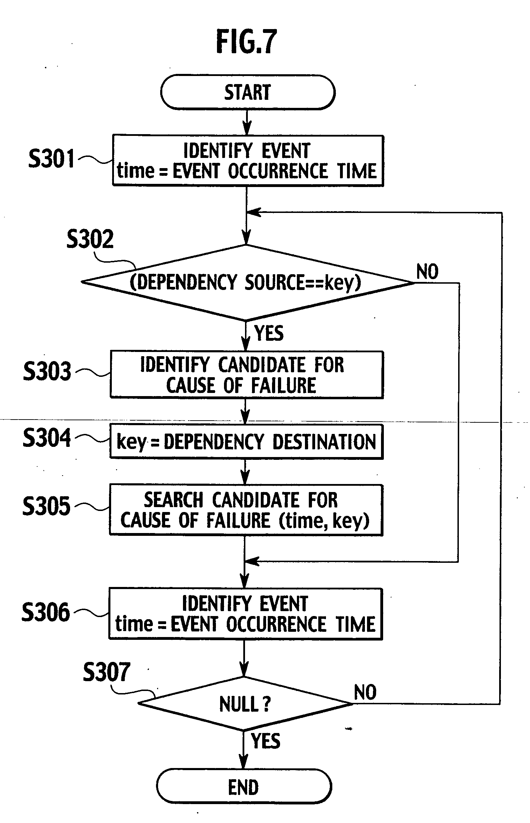

FIG. 7 shows a procedure for identifying a cause of failure i.e., detailed procedure of the step S202 in FIG. 6. The cause identifying unit 5 searches the database 4 based on the received failure occurrence time (*time*) and then identifies an event immediately preceding the failure occurrence time. Moreover, the cause identifying unit 5 substitutes the event occurrence time of the immediately preceding event for the *time* (S301). The cause identifying unit 5 determines whether or not the dependency source of the immediately preceding event is consistent with the received failure element (*key*) (S302). If it is consistent, the cause identifying unit 5 then determines that the failure element depends on the immediately preceding event, and identifies the immediately preceding event as a candidate for a cause of failure and memorizes it.

The cause identifying unit 5 substitutes the dependency destination of the identified event as a candidate for a cause of failure (hereafter, referred to as 'identified event') for the *key* and then recursively invokes processing according to the searching procedure for a cause of failure shown in FIG. 4, so as to search an event on which the identified event depends (S304). The cause identifying unit 5 then searches the database 4 based on the dependency destination (*key*) of the identified event and the event occurrence time *(time)* (S305).

Either after the step S305 or in the case where the dependency source of the immediately preceding event is inconsistent with the failure element (*key*) in step S302, the cause identifying unit 5 tries to identify an event immediately preceding the identified event. Afterwards, the cause identifying unit 5 substitutes the event occurrence time of an event immediately preceding the identified event for the *time* (S306). The cause identifying unit 5 determines whether or not identification of the immediately preceding event is possible in step S306 (S307). In other words, the cause identifying unit 5 determines whether there is an immediately preceding event or not (NULL).

If there is an immediately preceding event, the cause identifying unit 5 then identifies the event as a candidate for a cause of failure. Processing returns to the step S302 as long as there is an immediately preceding event, and processing in the steps S302 through S307 is then repeatedly carried out. Otherwise, if there is no immediately preceding event (NULL), the cause identifying unit 5 terminates processing.

According to the management system 100 and the management method, detection of an event occurred in a device or system to be managed, extraction of a dependency regarding the event, and identification of a cause of failure based on the event and the dependency thereof are possible. Therefore, the management system 100 does not require preconditions that information of events and dependencies thereof and causes of failures need to be known in advance. Moreover, the management system 100 is capable of updating events and dependencies thereof stored in the database 4 according to an updating rule. Therefore, not only does the management system 100 not need to retain information in advance, it updates identified events and extracted dependencies as needed, and may retain only necessary information. This allows the management system 100 to reduce necessary storage capacity and information processing load.

As such, since there are no constraints according to the preconditions and the storage capacity imposed on the management system 100, the management system can identify a cause of a failure occurred in a variety of devices or systems. Furthermore, reduction in the information processing load allows facilitating identification of causes of failures, thereby reducing time for restoration from failures.

For example, the fact that the management system 100 does not need to retain and manage information of all events allows prevention of information retained by complex devices or systems including many elements from becoming a vast amount. Furthermore, it also prevents increase in an amount of information to be memorized and a processing load for analysis, which is brought about along with increase in time intervals between time of a cause of failure occurred and time of actual failure occurred, and makes cause of failure identification in devices or systems having limited storage capacity and calculating capability impossible. Therefore, the management system 100 is capable of identifying the cause of a failure occurred in devices or systems such as cellular phones having limited storage capacity and calculating capability.

Furthermore, in the management system 100, the trigger detecting unit 7 detects an update trigger to apply an update rule, and then notifies the updating unit 7a of the detected update trigger. The updating unit 7a can update the database 4 according to an update rule to be applied at the update trigger notified from the trigger detecting unit 7b. Therefore, the management system 100 is capable of explicitly specifying an update trigger for updating according to the update rule.

Furthermore, information regarding update rules as attribute information of events and dependencies is stored in the database 4, and the updating unit 7a can update the database 4 according to the information regarding update rules. This allows the management system 100 to control update of each event and each dependency thereof, providing flexible control. For example, the management system 100 is capable of controlling an update rule to be applied to each event or each dependency thereof, and flexibly controlling update according to the level of importance of an event or dependency thereof.

Particularly, the management system 100 is capable of using a rule ID as attribute information, and the updating unit 7a is capable of updating the database 4 according to an update rule identified by the rule ID. This allows the management system 100 to explicitly specify an update rule to be applied to each event or dependency thereof.

### (SECOND EMBODIMENT)

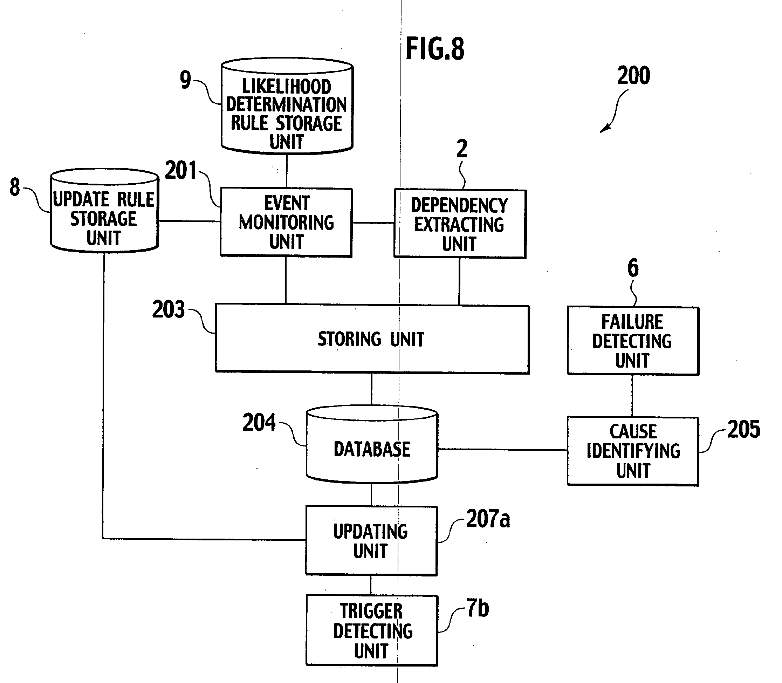

As shown in FIG 8, a management system 200 comprises an event monitoring unit 201, a dependency extracting unit 2, a storing unit 203, a database 204, a cause identifying unit 205, a failure detecting unit 6, an updating unit 207a, a trigger detecting unit 7b, an update rule storage unit 8, and a likelihood determination rule storage unit 9. In FIG. 8, substantially the same structure as the management system 100 shown in FIG 1 is attached with the same reference numerals, and duplicate explanation thereof is omitted.

The event monitoring unit 201 assigns likelihood to a detected event. It is preferable for the event monitoring unit 201 to determine likelihood to be assigned based on at least one of a type of the detected event and a likelihood of an event depending on the detected event. More specifically, the event management unit 201 determines likelihood to be assigned according to a likelihood determination rule. The likelihood determination rule is stored in the likelihood determination rule storage unit 9. The likelihood determination rule includes a determination rule, which is correspondence of a type of an event and likelihood of the event, determining likelihood based on likelihood of an event depending on the detected event Likelihood according to a type of an event may be set based on, for example, how much a device or system to be managed will be influenced by the event High likelihood may be set to an event of changing a system setting file, for example.

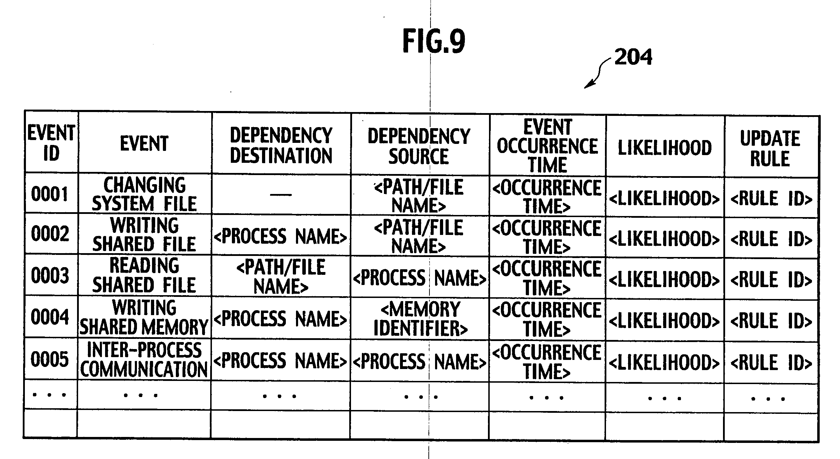

Likelihood corresponded to an event is stored in the database 204. As shown in FIG 9, the database 204 includes fields for event ID, event, dependency destination, dependency source, event occurrence time, likelihood, and update rule. The storing unit 203 assigns an event ID to an event and then stores the event, dependency, event occurrence time, likelihood, and rule ID corresponding to the event ID. The updating unit 207a updates likelihood.

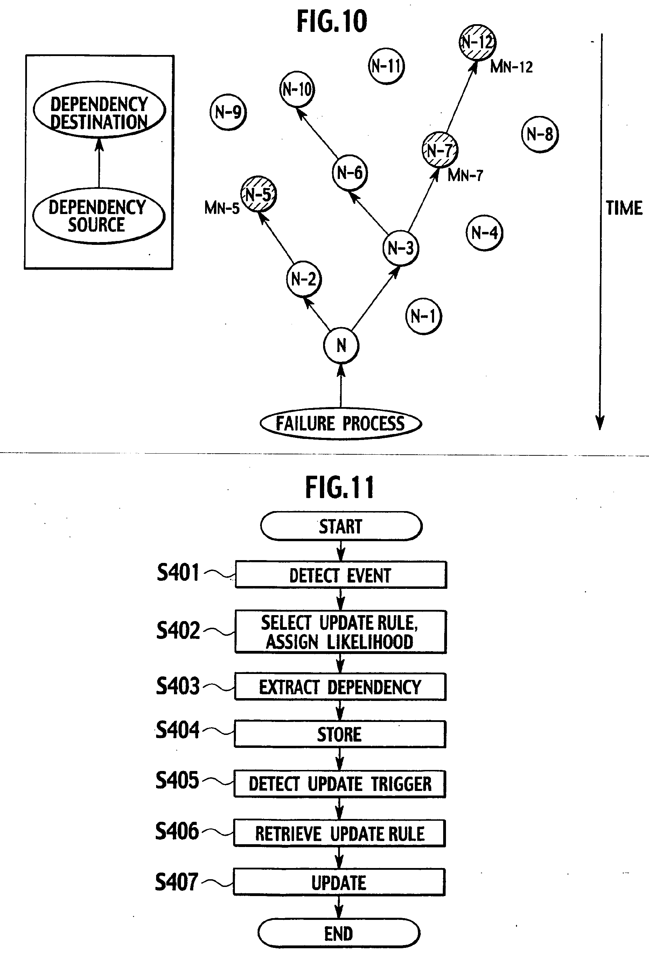

The cause identifying unit 205 identifies a cause of failure based on the likelihood FIG. 10 shows a searching procedure for a cause of failure by the cause identifying unit 205. FIG. 10 shows relationship between events as with FIG. 4. The cause identifying unit 205 traces dependencies from a failure element (failure process or the like) notified from the failure detecting unit 6 as with FIG 4 as a starting point, and searches events on which the failure process is directly or indirectly dependent.

Next, the cause identifying unit 205 accumulatively adds likelihood of each event on which the failure process is directly or indirectly dependent to a variable: *Mi* (where i denotes an event name). The cause identifying unit 205 then identifies as a candidate for a cause of failure only an event having the variable *Mi* greater than a predetermined threshold. In FIG. 10, the cause identifying unit 205 identifies events 'N-5', 'N-7', and 'N-12' having variables 'M_{N-5}','M_{N-7}', and 'M_{N-12}', respectively, exceeding the predetermined threshold as candidates for a cause of failure.

Alternatively, the cause identifying unit 205 may compare likelihoods of respective events on which the failure process is directly or indirectly dependent, and then select as a candidate for a cause of failure an event having high likelihood i.e., an event having a high possibility of being a cause of failure. The cause identifying unit 205 may put events in order according to likelihood, and then select a predetermined number of upper ranking events as candidates for a cause of failure. The event monitoring unit 201, the storing unit 203, the cause identifying unit 205, and the updating unit 207a are substantially the same as the event monitoring unit 1, the storing unit 3, the cause identifying unit 5, and the updating unit 7a in FIG 1 except for the above-described points.

Next, a procedure of a management method carried out by the management system 200 shown in FIG 8 is described using FIGS. 11 through 13. FIG 11 shows a management method for events and dependencies thereof. The management system 200 detects an event occurred in a device or system to be managed (S401). The management system 200 selects an update rule regarding the detected event (rule ID). Moreover, the management system 200 determines likelihood of the detected event according to a likelihood determination rule, and assigns the likelihood to the event (S402). The management system 200 extracts a dependency regarding the occurred event (S403). The management system 200 stores the event, dependency thereof, likelihood, rule ID and the like in the database 204 (S404). The management system 200 detects an update trigger (S405). The management system 200 retrieves an update rule to be applied at the detected update trigger from the update rule storage unit 8 (S406). The management system 200 updates the database 204 according to the retrieved update rule (S407).

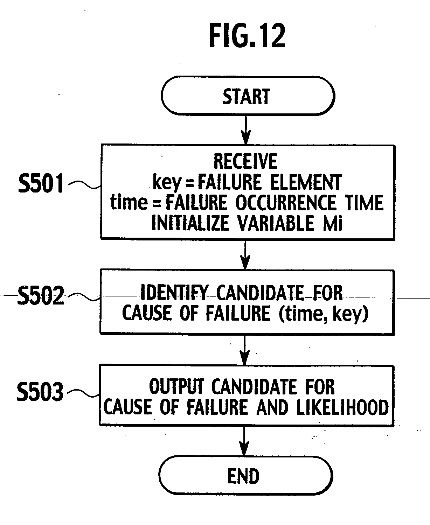

FIG 12 shows a procedure of the cause identifying unit 205. The cause identifying unit 205 receives a failure element (*key*) and failure occurrence time (*time*) from the failure detecting unit 6. The cause identifying unit 205 substitutes the failure element for a variable: *key* and failure occurrence time for a variable: *time*. When identifying a cause of failure using the variable *Mi,* the cause identifying unit 205 initializes the variable *Mi* (S501). The cause identifying unit 205 identifies a candidate for a cause of failure based on likelihood using the failure element as the *key* and the failure occurrence time as the *time* (S502). The cause identifying unit 205 outputs the identified candidate for a cause of failure and likelihood thereof (S503).

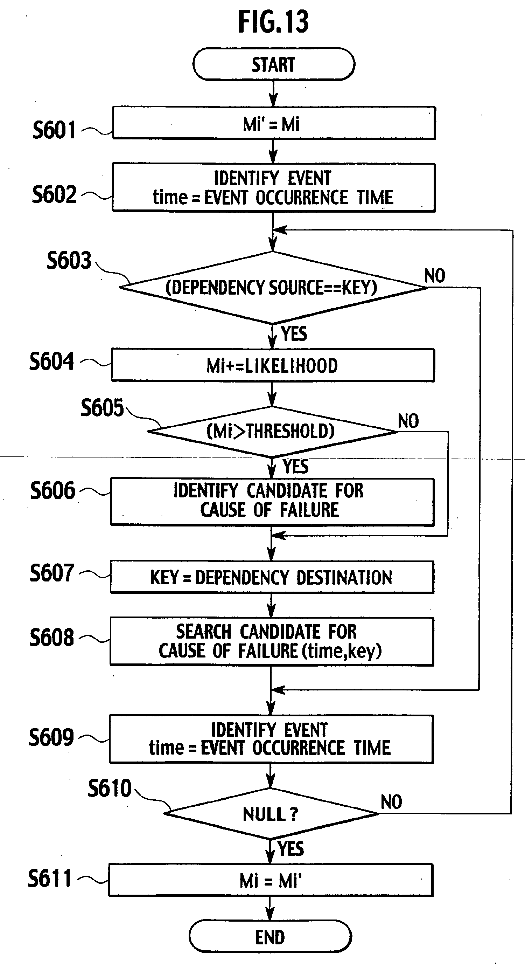

FIG 13 shows a procedure for identifying a cause of failure i.e., further detailed procedure of the step S502 shown in FIG. 12. The cause identifying unit 205 substitutes a variable for accumulatively added likelihood i.e., the variable *Mi* for retaining the accumulatively added likelihood for a local variable *Mi*' (S601). The cause identifying unit 205 searches the database 204 based on the received failure occurrence time (*time*), thereby identifying an event immediately preceding the failure occurrence time. Moreover, the cause identifying unit 205 substitutes the time of the immediately preceding failure event for *time* (S602).

The cause identifying unit 205 determines whether or not a dependency source of the immediately preceding event is consistent with the received failure element (*key*) (S603). If it is consistent, the cause identifying unit 205 accumulatively adds likelihood of the immediately preceding event to the variable *Mi* (S604). The cause identifying unit 205 determines whether or not the variable *Mi* after accumulative addition is greater than a predetermined threshold (S605). If the cause identifying unit 205 has determined that the variable *Mi* after accumulative addition is greater than the predetermined threshold, it identifies and memorizes the immediately preceding event as a candidate for a cause of failure (S606). Processing then proceeds to step S607 after the step S606. Otherwise, if it is determined in the step S605 that the variable *Mi* after accumulative addition is less than the predetermined threshold, the cause identifying unit 205 skips the step S606, directly proceeding to the step S607.

The cause identifying unit 205 substitutes the dependency destination of the identified event for the *key*, and then recursively invokes processing according to the searching procedure for a cause of failure shown in FIG 10 (S607). The cause identifying unit 205 searches the database 204 based on the dependency destination of the identified event (*key*) and the event occurrence time (*time*) (S608).

After the step S608 or in step S603, if the dependency source of the immediately preceding event is not consistent with the failure element (*key*), the cause identifying unit 205 tries to identify the event immediately preceding the identified event. Moreover, the cause identifying unit 205 substitutes the event occurrence time of the event immediately preceding the identified event for the *time* (S609).

The cause identifying unit 205 determines in the step S609 whether or not that the immediately preceding event can be identified (S610). In other words, the cause identifying unit 205 determines whether or not (NULL) there is an immediately preceding event. If there is, processing returns to the step S603, and the cause identifying unit 205 then carries out processing in the steps S603 through S610 as long as there is an immediately preceding event. Otherwise, if there is not, the cause identifying unit 205 substitutes the local variable *Mi*'for the variable *Mi* (S611) and terminates processing.

According to the management system 200 and the management method, in addition to the effects provided by the management system 100 shown in FIG 1 and the management method shown in FIGS. 5 through 7, the following effects may be additionally provided. The management system 200 is capable of selecting a highly possible cause of failure based on the likelihood, which allows improvement in accuracy of identifying a cause of failure. Furthermore, according to the management system 200, even if a failure element is dependent on many events, prevention of increase in the number of candidates for a cause of failure is possible by identifying based on the likelihood, and easier identification of a cause of failure is possible. Furthermore, the management system 200 is capable of assigning likelihoods according to event types and propagating likelihood of an event over dependent events according to a dependency. Therefore, the management system 200 is capable of more appropriately assigning likelihoods and thereby further improving accuracy of identifying a cause of failure.

### (THIRD EMBODIMENT)

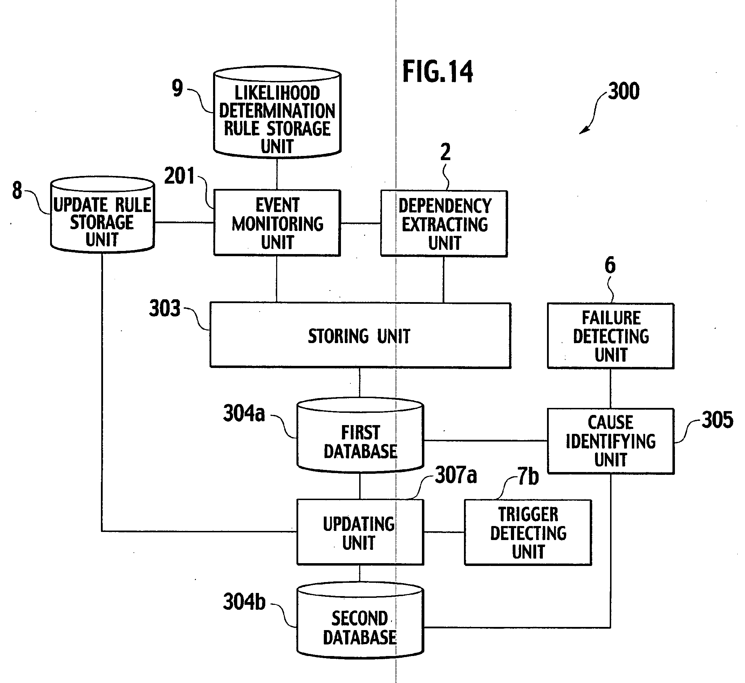

As shown in FIG 14, a management system 300 comprises an event monitoring unit 201, a dependency extracting unit 2, a storing unit 303, a first database 304a, a second database 304b, a cause identifying unit 305, a failure detecting unit 6, an updating unit 307a, a trigger detecting unit 7b, an update rule storage unit 8, and a likelihood determination rule storage unit 9. In FIG 14, substantially the same structure as the management systems 100 and 200 in FIGS. 1 and 8 is attached with the same reference numerals, and description thereof is omitted.

The management system 300 comprises the first database 304a, which is a first storage unit, and a second database 304b, which is a second storage unit. The first database 304a may use a volatile storage medium. The volatile storage medium allows high recording rate. However, storage capacity thereof is limited and cost per unit capacity is high. The first database 304a may use main memory. The second database 304b may use a nonvolatile storage medium. The nonvolatile storage medium allows that storage capacity thereof is large and cost per unit capacity is low. In other words, the second database 304b is capable of retaining a large amount of data with low cost However, it has low recording late. The second database 304b may use a magnetic storage device or a database server in a network, for example. Information can be stored in the first database 304a and the second database 304b as the database 204 shown in FIG. 9.

The storing unit 303 stores information at event occurrence received from the event monitoring unit 201 and the dependency extracting unit 2 in the first database 304a. Since storing information in the first database 304a with high recording rate is possible, the management system 300 can reduce overhead of storing information.

The updating unit 307a retrieves information from the first database 304a, and then stores it in the second database 304b. In other words, the updating unit 307a transfers information from the first database 304a to the second database 304b. For example, the updating unit 307a transfers information at a predetermined timing. More specifically, the updating unit 307a is capable of transferring information when the amount of information stored in the first database 304a exceeds a predetermined threshold or when rebooting a device or a system to be managed.

Furthermore, the updating unit 307a retrieves an event and dependency thereof from the first database 304a, updates them, and then stores the updated event or the updated dependency thereof in the second database 304b. In other words, the updating unit 307a transfers and updates information at the same time.

The updating unit 307a is capable of updating information while transferring it by retaining an update trigger of 'storing in the second database' in the update trigger rule table 82. The updating unit 307a updates according to update rules of the rule IDs '0x02' and '0x04' in order. The updating unit 307a updates the information retrieved from the first database 304a according to the description of update of the rule ID '0x02', and then stores it in the second database 304b. Afterwards, it deletes information stored in the first database 304a according to the description of the rule ID '0x04'.

The cause identifying unit 305 accesses the first database 304a and the second database 304b, and then identifies a cause of fault using information stored therein. The storing unit 303, the cause identifying unit 30, and the updating unit 307a are substantially the same as the storing unit 203, the cause identifying unit 305, and the updating unit 207a in FIG 8 except for the above-described points.

According to such management system 300, in addition to the effects provided by the management systems 100 and 200 shown in FIGS. 1 and 8, the following results may be additionally provided. The management system 300 is capable of temporarily storing information in the first database 304a and storing only necessary updated information in the second database 304b. In addition, the updated information allows reduction in the amount of information stored in the second database 304b.

Moreover, the management system 300 uses two storage media having different characteristics as the first and the second databases 304a and 304b. The management system 300 is capable of temporarily storing information in the first database 304a, which is capable of high rate recording, and appropriately transferring it to the second database 3U4b. As a result, the management system 300 is capable of collecting information and decreasing an overhead of storing it in the database 304a.

Such management system 300 is effective for devices or systems having limited storage capacity. For example, cellular phones have strict storage capacity limitations and therefore use of a large amount of memory to store necessary information for identifying a cause of failure is not realistic. However, according to the management system 300, such situation may be avoided.

Although the inventions have been described above by reference to certain embodiments of the inventions, the inventions are not limited to the embodiments described above. Modifications and variations of the embodiments described above will occur to those skilled in the art, in light of the above teachings.

## Claims

1. A management system, comprising:
an event monitoring unit configured to detect an event;
a dependency extracting unit configured to extract a dependency regarding the event;
a storage unit in which the event and the dependency are stored;
an updating unit configured to update the event and the dependency stored in the storage unit according to an update rule; and
a cause identifying unit configured to identify a cause of failure based on the event and the dependency by accessing the storage unit.

2. The management system according to Claim 1, further comprising:
a trigger detecting unit configured to detect an update trigger for applying the update rule and notify the updating unit of the update trigger; wherein
the updating unit updates the storage unit according to the update rule to be applied at the update trigger notified from the trigger detecting unit.

3. The management system according to Claim 1, wherein
the storage unit in which information regarding the update rule is stored as attribute information of the event and the dependency; and
the updating unit updates the storage unit based on the information for the update rule.

4. The management system according to Claim 3, wherein
the attribute information is an identifier for identifying the update rule; and
the updating unit updates the storage unit according to the update rule identified by the identifier.

5. The management system according to Claim 1, wherein
the event monitoring unit assigns likelihood to the event;
the storage unit in which the likelihood corresponded to the event is stored; and
the cause identifying unit identifies the cause of failure based on the likelihood.

6. The management system according to Claim 5, wherein the event monitoring unit determines the likelihood based on at least one of a type of the event and a likelihood of an event depending on the event.

7. The management system according to Claim 1, wherein
the storage unit comprises a first storage unit and a second storage unit; and
the updating unit retrieves the event and the dependency from the first storage unit and updates the event and the dependency, and stores the event and the dependency, which are updated in the second storage unit.

8. A managing method, comprising:
detecting an event;
extracting a dependency regarding the event;
updating the event and the dependency stored in a storage unit according to an update rule; and
identifying a cause of failure based on the event and the dependency by accessing the storage unit
